Europäisches Patentamt

European Patent Office

Office européen des brevets

(19)

(11) Veröffentlichungsnummer: **0 217 190**
**B1**

(12) **EUROPÄISCHE PATENTSCHRIFT**

(45) Veröffentlichungstag der Patentschrift: **12.12.90**

(51) Int. Cl.⁵: **A 47 J 43/26**

(21) Anmeldenummer: **86112540.9**

(22) Anmeldetag: **10.09.86**

(54) **Vorrichtung zum Knacken oder Zerdrücken von Nüssen.**

(30) Priorität: **24.09.85 DE 3533970**
**22.07.86 DE 3624733**

(43) Veröffentlichungstag der Anmeldung:
**08.04.87 Patentblatt 87/15**

(45) Bekanntmachung des Hinweises auf die
Patenterteilung:
**12.12.90 Patentblatt 90/50**

(84) Benannte Vertragsstaaten:
**AT BE CH FR GB IT LI LU NL SE**

(56) Entgegenhaltungen:
**DE-A-2 165 853**
**DE-C- 536 107**
**FR-A- 635 712**
**GB-A- 6 736**
**US-A-2 590 953**

(73) Patentinhaber: **Hörnlein, Reinhard**
**Einbecker Strasse 39**
**D-3450 Holzminden (DE)**

(72) Erfinder: **Hörnlein, Reinhard**
**Einbecker Strasse 39**
**D-3450 Holzminden (DE)**

(74) Vertreter: **Stracke, Alexander, Dipl.-Ing. et al**
**Patentanwälte Dipl.-Ing. Loesenbeck Dipl.-Ing.**
**Stracke Jöllenbecker Strasse 164 Postfach 5605**
**D-4800 Bielefeld 1 (DE)**

Courier Press, Leamington Spa, England.

## Beschreibung

Die Erfindung betrifft eine Vorrichtung zum Knacken oder Zerdrücken von Nüssen gemäß dem Oberbegriff des Anspruchs 1.

Eine gattungsgemäße Vorrichtung zum Knakken oder Zerdrücken von Nüssen ist beispielsweise aus der DE—PS 536 107 bekannt.

Hierbei wird durch den Behälter eine Gewindespindel geführt, die eine durch eine Aufnahmeöffnung in die Aufnahmekammer des Behälters eingebrachte Nuß zerdrückt, wobei die Schaftaufbringung zum Zerdrücken der Nuß ausschließlich durch Drehen der Gewindespindel erfolgt.

Nachteilig bei dieser Art eines Nußknackers ist einmal, daß aufgrund der relativ großen Steigung des Gewindes der Gewindespindel und des Behälters, die erforderlich ist, um eine Nuß in angemessener Zeit zu knacken, die Gefahr sehr groß ist, die Nuß so weit zu zerdrücken, daß das Nußfleisch praktisch so weit zerstört und mit den zerbrochenen Nußschalen vermischt wird, daß es nicht mehr genießbar ist. Zum anderen besteht auch die Gefahr, daß beim Zerdrükken einer Nuß einzelne Stücke der Nußschale aus der Einwurföffnung herausspritzen, was ja gleichbedeutend mit einer Verunreinigung umliegender Möbelteile oder des Fußbodens ist.

Eine weitere gattungsgemäße Vorrichtung, die ebenfalls, als Spindelpresse arbeitet, ist durch das DE—G 82 04 231.4 bekannt. Dabei ist am Ende der Gewindespindel ein Schieber angeordnet, der mit einer Gegenplatte zusammenarbeitet, die ihrerseits eine wannenartige oder eine kerbenartige Vertiefung aufweist. Mit dieser Vorrichtung läßt sich aber trotz des seitlich ausladenden Schiebers immer nur eine Nuß knacken, wobei auch hier der Nachteil besteht, daß die zerberstenden Schalen zur Seite wegspritzen können. Auch hier besteht die Gefahr, daß die Nußkerne zerquetscht werden. Auch ist es bei keiner der bekannten Vorrichtungen möglich, auf sinnvolle Art und Weise mehrere Nüsse gleichzeitig zu knacken.

Der im Anspruch 1, angegebenen Erfindung liegt die Aufgabe zugrunde, eine Vorrichtung der gattungsgemäßen Art zu schaffen, bei der die Nußschalen in der Aufnahmekammer festgehalten werden, ein Zerquetschen der Nußkerne weitgehend vermieden wird und die Möglichkeit besteht, eine Anzahl von Nüssen gleichzeitig zu knacken.

Diese Aufgabe wird durch die im Kennzeichen des Anspruchs 1 aufgeführten Merkmale gelöst.

Mit der erfindungsgemäß ausgestalteten Vorrichtung ist es nun möglich, die Aufnahmekammer mit einer Mehrzahl von zumindest gleichartigen Nüssen zu beschicken, um anschließend durch Aufschrauben des Oberteiles die Nüsse festzusetzen und eventuell anzuknacken und danach durch Druck auf die Vorrichtung die Nüsse unter Schonung der Kerne endgültig aufzuknacken. Die Nußkerne bleiben ebenso in der Vorrichtung wie die Nußschalen, wobei ein Herausspritzen der Nußschalen vollkommen unmöglich ist. Erst nach Öffnen der Vorrichtung durch Aufschrauben ist ein Herausnehmen der Nußkerne bzw. ein Ausschütten der Nußschalen möglich.

Eine vorteilhafte Ausgestaltung der Erfindung sieht vor, daß das Unterteil der Vorrichtung aus einem Griffteil, einem damit verbundenen Sockelteil und einer auf das Sockelteil aufgeschraubten Hülse besteht, die ein Außengewinde aufweist, auf das das Oberteil aufschraubbar ist. Dabei bildet die dem Griffteil abgewandte Stirnfläche des Sockelteiles eine Druckfläche der Vorrichtung. Durch Drehen der Hülse kann die Höhe der Aufnahmekammer, die durch die Druckfläche des Sockelteiles und den Mantel der Hülse bestimmt ist, verändert werden, so daß eine Einstellung auf die Größe der jeweils zu knackenden Nuß möglich ist.

Nach dem Aufschrauben des Oberteiles auf die Hülse, deren Außengewinde nach einer weiteren vorteilhaften Ausgestaltung als Bewegungsgewinde, beispielsweise als Trapezgewinde, ausgestaltet ist, erfolgt je nach Härte der zu knackenden Nußschale eine Wechselwirkung zwischen dem Außen- und Innengewinde der Hülse. Sobald dabei die aufzubringende Kraft bzw. das aufzubringende Drehmoment größer wird, wird aufgrund der größeren Steigung das Außengewinde geklemmt, während das Oberteil mitsamt der Hülse über deren Innengewinde mühelos weitergedreht werden kann, und zwar solange, bis die Nußschale zumindest angeknackt ist, Zum weiteren Knacken der Nuß kann nun in beschriebener Weise durch das große Spiel zwischen dem Außengewinde der Hülse und dem zugeordneten Gewinde des Oberteiles eine Kipp-Druckbewegung vollzogen werden, mit der die Nußschale soweit geknackt wird, daß der Nußkern einwandfrei herausnehmbar ist. Dabei ist selbstverständlich von Vorteil, daß durch das große Spiel der einander zugeordneten Gewinde der Hülste einerseits und des Oberteiles andererseits zwar eine axiale Bewegung möglich ist, diese jedoch in ihrem Hub soweit begrenzt ist, daß ein Zerquetschen des Nußkernes ausgeschlossen ist.

Weitere vorteilhafte Ausgestaltungen sind durch die abhängigen Ansprüche gekennzeichnet.

Ausführungsbeispiele der Erfindung werden nachfolgend anhand beigefügter Zeichnungen beschrieben.

Es zeigen:

Figur 1 eine erfindungsgemäß ausgebildete Vorrichtung in einer geschnittenen Seitenansicht dargestellt,

Figur 2 ein weiteres Ausführungsbeispiel einer erfindungsgemäßen Vorrichtung,

Figur 3 die Vorrichtung nach der Figur 1, bei der die Einzelteile explosiv in einer Seitenansicht dargestellt sind,

Figur 4 einen Querschnitt durch die Vorrichtung gemäß der Linie IV—IV in Figur 1,

Figur 5 ein Ausführungsbeispiel eines erfindungsgemäßen Gewindes in einer Schnittdarstellung und

Figur 6 eine weitere Ausführungsform.

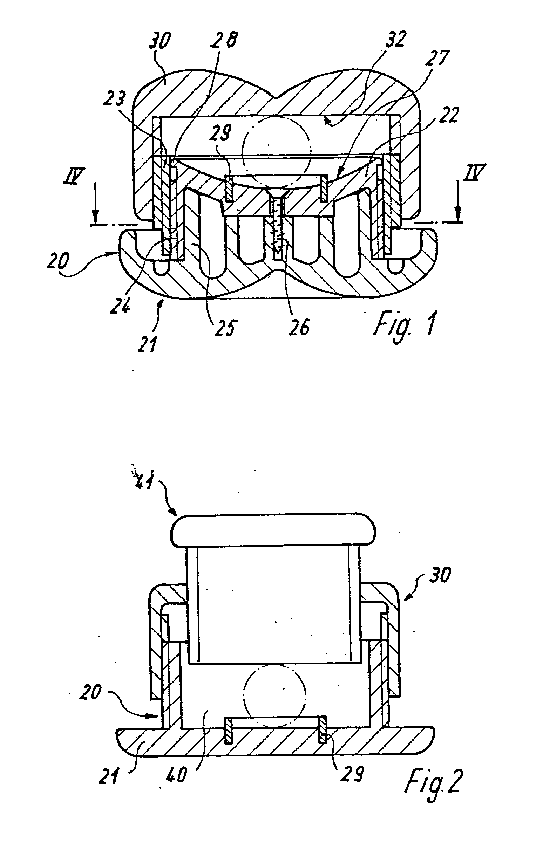

Die in der Figur 1 gezeigte Vorrichtung zum Knacken oder Zerdrücken von Nüssen besteht in der Hauptsache aus einem Unterteil 20 sowie einem mit einem Unterteil 20 verschraubten Oberteil 30. Das Unterteil 20 wiederum setzt sich zusammen aus einem Griffteil 21, einem Sockelteil 22 sowie einer Hülse 23. Das Sockelteil 22 ist dabei ringförmig ausgebildet, übergreift mit seiner Außenfläche einen ringförmigen Ansatz 25 des Griffteiles 21 und ist mit Hilfe einer Schraube 26, die im vorliegenden Ausführungsbeispiel mittig angeordnet ist, fest verschraubt.

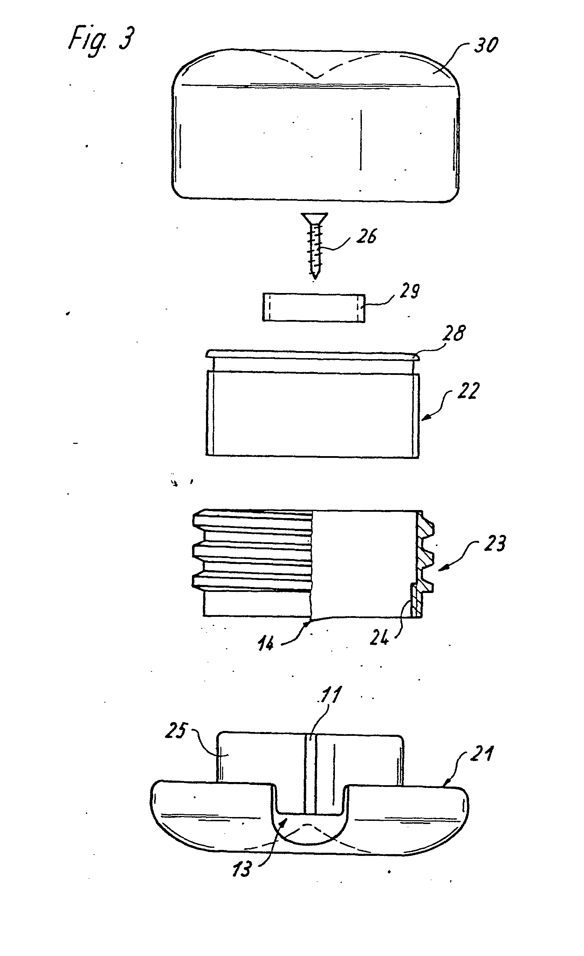

Auf seiner äußeren Mantelfläche weist das Sockelteil 22 ein Gewinde 24 auf, das an dem dem Griffteil 21 abgewandten Ende durch einen umlaufenden Ring 28 begrenzt wird. Dieser ist in seinem äußeren Durchmesser kleiner als der lichte Durchmesser der Hülse 23, jedoch größer als der Kerndurchmesser des Gewindes 24. Die mit einem Innengewinde versehene Hülse 23 ist auf das Sockelteil 22 aufgeschraubt, und zwar vor einer endgültigen Montage von der dem Ring 28 gegenüberliegenden Seite des Sockelteiles 22 aus. Dies ist besonders deutlich in der Figur 3 zu erkennen.

Der Ring 28 verhindert, daß die Hülse 23 im fertigmoctierten Zustand von dem Sockelteil 22 abgedreht werden kann.

Die dem Griffteil 21 abgewandte Bodenfläche 27 des Sockelteiles 22 bildet zusammen mit der Bodenfläche 32 des Oberteiles 30 die Druckflächen, über die die entsprechende Druckkraft auf die zu knackenden Nüsse aufgebracht wird.

Zur Arretierung von Nüssen, die im weitesten Sinne keine kugelige Raumform aufweisen, beispielsweise Paranüssen, ist auf der dem Oberteil 30 zugewandten Bodenfläche 27 ein erhabener umlaufender Ring 29 vorgesehen, der selbstverständlich zur Zweckerfüllung auch Unterbrechungen aufweisen kann, mit dessen Hilfe eine eingelegte Nuß auch während des Knackvorganges einwandfrei in ihrer Lage gehalten wird.

Wie in der Figur 3 zu erkennen ist, weist die dem Griffteil 21 zugewandte Stirnseite der Hülse 23 eine sich in Achsrichtung erstreckende Nase 14 auf. Diese bewirkt, daß bei einem zu starken Schrauben der Hülse 23 diese mit ihrer Stirnseite sich nicht so weit in das Griffteil 21 einschneidet, daß sie, wenn überhaupt, nur sehr schwer gelöst werden kann. Durch die Nase 14 ist somit ein einfaches Lösen der Hülse 23 dann möglich, wenn diese zu fest angeschraubt ist.

Da sich in den Gewindegängen des gemeinsamen Gewindes des Sockelteiles 22 und der Hülse 23 Schmutzpartikel, beispielsweise kleinere Nußschalenreste, festsetzen können, die unter Umständen die einwandfreie Schraubmöglichkeit behindern, sieht eine weitere vorteilhafte Ausgestaltung der Erfindung vor, daß das Gewinde zumindest an einer Stelle in Achsrichtung verlaufend freigeschnitten ist. Dieser Freischnitt erfolgt zweckmäßigerweise an dem Innengewinde der Hülse 23 und bewirkt, daß bei jeder Drehbewegung der Hülse 23 die Gewindegänge des Sockelteiles 22 freigeräumt werden, wobei die abfallenden Schmutzpartikel, die jedoch mengenmäßig sehr gering sind, im Bereich des Griffteiles 21 gesammelt werden.

Eine verdrehsichere Lage des Sockelteiles 22 zum Griffteil 21 ist besonders deutlich in der Figur 4 gezeigt. Dabei sind in dem vorliegenden Ausführungsbeispiel an der Innenfläche des Sockelteiles 22 in Längsrichtung verlaufende Federn 12 angeformt, die in zugeordnete und in gleicher Richtung verlaufende Nuten, die in dem Ansatz 25 des Griffteiles 21 vorgesehen sind, eingreifen. Zur besseren Handhabung der Vorrichtung, d.h. insbesondere um die Griffähigkeit des Griffteiles 21 zu erhöhen, ist nach einer weiteren vorteilhaften Ausgestaltung der Erfindung vorgesehen, das Griffteil 21 mit einer Grifföffnung 13 zu versehen, in der bei Gebrauch ein Finger eingelegt werden kann, so daß die Handhabung der Vorrichtung erleichtert wird.

Ein weiteres Ausführungsbeispiel der Vorrichtung ist in der Figur 2 dargestellt. Das Oberteil 30 weist hierbei eine Gewindeöffnung auf, die in Achsrichtung verläuft und die von einem Gewindestopfen 41 durchtreten wird, dessen Gewindedurchmesser geringfügig kleiner ist als der lichte Durchmesser der Aufnahmekammer 40 des Unterteiles 20. Nach Einlegen einer Nuß wird das Oberteil 30 auf das Unterteil so weit aufgeschraubt, bis ein erster Widerstand zu verspüren ist, bzw. bis die Nuß hörbar angeknackt ist. Sodann kann über das erfindungsgemäß ausgebildete Gewinde zwischen dem Oberteil 30 und dem Unterteil 20 in einer Kippbewegung so weit Druck ausgeübt werden, daß die Schale vollends zerbirst. Die Druckflächen der Vorrichtung werden bei diesem Ausführungsbeispiel einmal durch die Bodenfläche des Unterteiles 20 und zum anderen durch die im Innern der Vorrichtung liegende Stirnfläche des Stopfens 41 gebildet. Mit Hilfe diese Stopfens, der je nach Größe der eingelegten Nuß durch Drehen seine Stellung gegenüber den Unterteil 20 verändert, wird auch die Höhe der Aufnahmekammer 40 verändert.

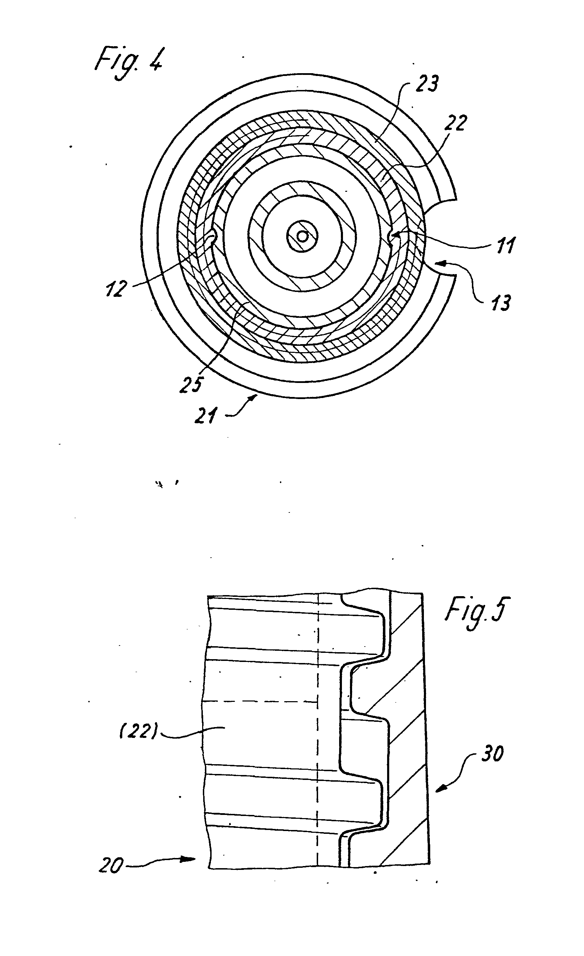

In der Figur 5 ist ein Ausführungsbeispiel eines erfindungsgemäßen Gewindes zwischen dem Unterteil 20 und dem Oberteil 30 gezeigt. Dabei ist das Gewinde als Trapezgewinde ausgebildet. Ebenso ist es aber auch möglich, alle anderen Formen von Bewegungsgewinden wie beispielsweise Flachgewinde, Rundgewinde oder dergleichen zu verwenden. Wichtig ist jedoch erfindungsgemäß, daß die einander zugeordneten Gewinde in axialer Richtung ein erhebliches Spiel zueinander aufweisen. Im vorliegenden Beispiel ist ein Spiel ic seitlicher und axialer Richtungen vorgesehen. Dadurch bedingt ist die Möglichkeit gegeben, das Oberteil 30 sowohl zu kippen als auch über einen begrenzten Bereich in axialer Richtung zu bewegen, wobei eine Kippkante in aller Regel von der eingelegten Nuß gebildet wird. Dabei soll die axial mögliche Bewegungsstrecke so ausgelegt sein, daß ein Zerquetschen des Nußkernes nicht möglich ist.

Beim Knacken einer Nuß wird das Oberteil 30 durch Aufschrauben auf das Unterteil 20 und den durch die Nuß entgegengebrachten Widerstand so weit nach oben gedrückt, daß die oberen Flanken des Gewindes sich an den unteren Flanken des Unterteilgewindes abstützen. Der Abstand zwischen der Flankenunterseite des Oberteilgewindes zur Flankenoberseite des Unterteilgewindes bestimmt jetzt praktisch den Hub, der mit dem Oberteil 30 vollzogen werden kann.

Neben der in den Figuren 1—3 dargestellten Möglichkeit, den Ring als separates Teil auszubilden und einzusetzen, ist es auch möglich, diesen mit dem Sockelteil 22 oder dem Griffteil 21 einstückig zu gestalten, insbesondere dann, wenn die entsprechenden Teile aus Kunststoff gefertigt sind.

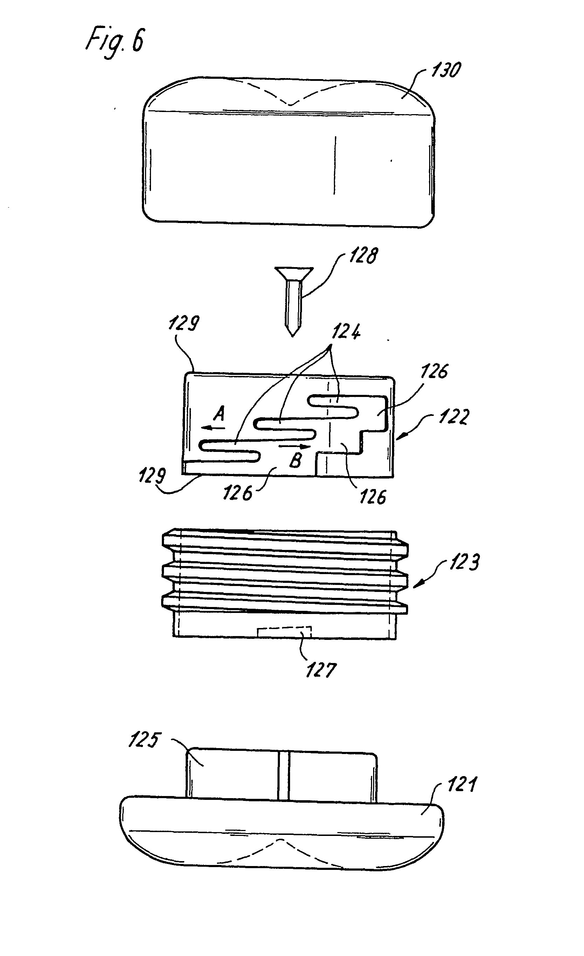

Die in der Fig. 6 gezeigte Vorrichtung zum Knacken oder Zerdrücken von Nüssen besteht aus einem Griffteil 121, einen an dem Griffteil 121 angeformten Ansatz 125, einem über den Ansatz 125 schiebbaren Sockelteil 122, das mit einer Schraube 128 an dem Griffteil 121 festlegbar ist, einer Hülse 123, die im montierten Zustand das Sokkelteil 122 zumindest teilweise überdeckt und dabei in Achsrichtung verschiebbar ist sowie einem Oberteil 130, das mit einem Innengewinde auf ein Außengewinde der Hülse 123 aufschraubbar ist, wobei beide Gewinde ein erhebliches Spiel zueinander in seitlicher sowie in axialer Richtung aufweisen.

Die Hülse 123 und das Sockelteil 122 weisen auf ihren einander zugewandten Flächen miteinander korrespondierende Arretierungsmittel auf, die auf seiten des Sockelteiles 122 aus Ausnehmungen 124 und auf seiten der Hülse 123 aus Rastnasen 127 bestehen.

Die Ausnehmungen 124 sind in verschiedenen Querschnittsebenen angeordnet und verlaufen im wesentlichen parallel zu den Stirnflächen 129 des Sockelteiles 122.

Die Ausnehmungen 124 sind durch Vertiefungen 126 untereinander verbunden, wobei die Breite der Vertiefungen 126 geringfügig größer als die Länge der Rastnasen 127 und kleiner als die Länge der Ausnehmungen 124 ist.

Im montierten Zustand greifen die Rastnasen 127, die im vorliegenden Ausführungsbeispiel ebenso wie die Ausnehmungen 124 und Vertiefungen 126 auf zwei sich gegenüberliegenden Seiten der Hülse 123 bzw. des Sockelteiles 122 angeordnet sind, zunächst in die Vertiefungen 126 ein. Durch axiale Verschiebung der Hülse 123 schlagen die Rastnasen 127 an eine Begrenzungsfläche der Ausnehmungen 124. Nach einem Drehen der Hülse 123 in Richtung des Pfeiles A erreicht diese eine der Endstellungen. In vorteilhafter Weise weisen die Ausnehmungen 124 in ihren seitlichen Begrenzungen eine gewisse Konizität auf, der die Rastnasen 127 in ihrer Form angepaßt sind. Dadurch kann die Hülse 123 beim Drehen in Richtung des Pfeiles A fest arretiert werden, während sie sich beim Lösen in Richtung des Pfeiles B leicht lösen läßt. Bei diesem Lösen wird die Hülse 123 so weit in Richtung des Pfeiles B gedreht, bis sie an eine seitliche Begrenzung der nächsten Vertiefung 126 anschlägt. Sodann kann die Hülse 123 wiederum in axialer Richtung verschoben und der zuvor beschriebene Arretierungsvorgang wiederholt werden. In gleicher Weise kann eine weitere Höhenverstellung der Hülse 123 vorgenommen werden, so daß hierbei eine stufenweise Verstellung des Abstandes der Bodenfläche des Oberteiles 130 und des Sockelteiles 122 zueinander erfolgt.

Nach dem in der Fig. 6 dargestellten Ausführungsbeispiel ist es denkbar, eine Vorrichtung mit den bereits beschriebenen Merkmalen zu versehen, bei der das Oberteil 130 einen Stopfen aufweist, der mit einem Deckelteil des Oberteiles 130 verbunden ist und dessen in das Innere der Vorrichtung ragende Stirnfläche die Bodenfläche des Oberteiles bildet. Dabei können die Arretierungsmittel, also die Ausnehmungen 124 und die entsprechenden Rastnasen 127 wahlweise am Stopfen oder am Deckelteil vorgesehen sein.

**Patentansprüche**

1. Vorrichtung zum Knacken oder Zerdrücken von Nüssen, bestehend aus einem Behälter mit einer Aufnahmekammer für eine oder mehrere Nüsse, dadurch gekennzeichnet, daß der Behälter als Schraubdose ausgebildet ist, die aus jeweils einem miteinander verschraubbaren und ein- oder mehrstückig ausgebildeten Ober- und Unterteil (30, 20) besteht, deren jeweils innere Bodenflächen (32, 27) gemeinsam die Druckflächen zum Knacken der Nüsse bilden, und daß die einander zugeordneten Gewinde des Ober- und Unterteiles (30, 20) ein solch erhebliches Spiel zueinander in axialer Richtung aufweisen, daß ein Zerquetschen der Nuß kerne vermieden wird.

2. Vorrichtung nach Anspruch 1, dadurch gekennzeichnet, daß die einander zugewandten Gewinde des Ober- und Unterteiles (30, 20) ein erhebliches seitliches Spiel zueinander aufweisen.

3. Vorrichtung nach Anspruch 1 oder 2, dadurch gekennzeichnet, daß das Unterteil (20) aus einem Griffteil (21), einem damit verbundenen Sockelteil (22) sowie einer Hülse (23) besteht, die mit einem Innengewinde auf das Sockelteil (22) aufgeschraubt und die über ein Außengewinde mit dem Oberteil (30) verschraubbar ist, die dem Griffteil (21) abgewandte Stirnfläche des Sockelteiles (22) die Bodenfläche (27) des Unterteiles (20) bildet und das Sockelteil (22) verdrehsicher mit dem Griffteil (21) verbunden ist.

4. Vorrichtung nach Anspruch 3, dadurch gekennzeichnet, daß das Sokkelteil (22) im Bereich seiner freien Stirnfläche einen umlaufenden Ring (28) aufweist, dessen Durchmesser etwa dem lichten Durchmesser der Hülse (23) entspricht und der größer ist als der Kerndurchmesser ihres Innengewindes, das Innengewinde der Hülse (23) sich teilweise auf ihrem dem Griffteil (21) zugewandten Innenflächenbereich erstreckt und das Sockelteil (22) mit einer mittig angeordneten Schraube (26) mit dem Griffteil verbunden ist.

5. Vorrichtung nach Anspruch 4, dadurch gekennzeichnet, daß das Gewinde des Sockelteiles und/oder das zugeordnete Gewinde der Hülse (23) mindestens einen quer zur Drehrichtung verlaufenden Freischnitt aufweist.

6. Vorrichtung nach Anspruch 3, dadurch gekennzeichnet, daß die Hülse (23) auf ihrer dem Griffteil (21) zugewandten Stirnseite eine Erhebung, beispielsweise eine angeformte Nase (14) aufweist.

7. Vorrichtung nach Anspruch 1 oder 2, dadurch gekennzeichnet, daß das Unterteil (20) auf seiner Bodenfläche (27) einen erhabenen, zumindest teilweise umlaufenden Ring (29) aufweist.

8. Vorrichtung nach Anspruch 1 oder 2, dadurch gekennzeichnet, daß das Oberteil (30) einen Stopfen (41) aufweist, der mit einem Dekkelteil des Oberteiles (30) verschraubt ist, dessen in das Innere der Vorrichtung ragende Stirnfläche die Bodenfläche des Oberteiles bildet, und daß der Gewindedurchmesser des Stopfens (41) geringfügig kleiner ist als der lichte Durchmesser der durch das Unterteil (20) teilweise gebildeten Aufnahmekammer (40).

9. Vorrichtung nach einem der Ansprüche 1 bis 8, dadurch gekennziechnet, daß das das Ober- und Unterteil (20, 30) verbindende Gewinde als Bewegungsgewinde, beispielsweise als Trapez-, Rund- oder Flachgewinde ausgebildet ist.

10. Vorrichtung nach Anspruch 1 oder 2, dadurch gekennzeichnet, daß das Ober- oder Unterteil verstellbare Arretierungsmittel aufweisen, mit denen der Abstand der Bodenflächenzueinander in Gebrauchsstellung veränderbar ist.

11. Vorrichtung nach Anspruch 10, dadurch gekennzeichnet, daß an den einander zugewandten Flächen der Hülse (123) und des Sokkelteiles (122) die miteinander korrespondierenden Arretierungsmittel vorgesehen sind.

12. Vorrichtung nach Anspruch 10 oder 11, dadurch gekennzeichnet, daß die Arretierungsmittel aus mehreren, in verschiedenen Querschnittsebenen angeordneten und im wesentlichen parallel zu den Stirnflächen (12) des Oberoder Unterteiles verlaufenden Ausnehmungen (124), sowie aus mindestens einer, in jeweils einer Ausnehmung teilweise eingreifenden erhabenen Rastnase (127) bestehen, wobei die Ausnehmungen (124) durch Vertiefungen (126) untereinander verbunden sind, die in ihrer Breite geringfügig größer als die Rastnase (127) und kleiner als die Länge der Ausnehmungen (124) sind.

## Revendications

1. Dispositif à casser ou écraser les noix, composé d'un réservoir à une chambre destinée à recevoir une ou plusieurs noix, caractérisé en ce que le réservoir est conformé comme une boîte à visser toujours constituée de parties supérieure et inférieure, vissables l'une sur l'autre et en un ou plusieurs éléments (30, 20), dont les surfaces de fond intérieures (32, 27) forment ensemble les surfaces de pression pour casser les noix et en ce que les filetages conjugués des parties supérieure et inférieure (30, 20) présentent entre elles dans le sens axial un très grand jeu qui évite de concasser les cerneaux.

2. Dispositif selon la revendication 1, caractérisé en ce que les filetages conjugués des parties supérieure et inférieure (30, 20) présentent ontre eux un important jeu latéral.

3. Dispositif selon la revendication 1 ou 2, caractérisé en ce que la partie inférieure (20) se compose d'une poignée (21), d'une base (22), qui y est raccordée, ainsi que d'une douille (23) qui, d'une part, est vissée sur la base (22) par un filetage intérieur et vissable, par un filetage extérieur, à la partie supérieure (30), et qui, d'autre part, forme le fond (27) de la partie inférieure (20) avec la surface frontale de la base (22) opposée à la poignée (21) et dont la base (22) est reliée à la poignée (21) de manière à ne pas s'en détacher.

4. Dispositif selon la revendication 3, caractérisé en ce que la base (22) présente, dans sa surface frontale libre, une bague tournante (28) dont le diamètre correspond environ au diamètre intérieur de la douille (23) et qui est supérieur au diamètre de l'âme de son filetage intérieur, le filetage intérieur de la douille (23) s'étendant en partie dans la zone de sa surface intérieure orientée vers la poignée (21) et la base (22) étant reliée à la poignée au moyen d'une vis centrée (26).

5. Dispositif selon la revendication 4, caractérisé en ce que le filetage intérieur de la base et/ou le filetage correspondant de la douille (23) présente au moins un dégagement transversal par rapport au sens de rotation.

6. Dispositif selon la revendication 3, caractérisé en ce que la douille (23) présente sur sa surface frontale orientée vers la poignée (21) une élévation, par exemple un tenon profilé (14).

7. Dispositif selon la revendication 1 ou 2, caractérisé en ce que la partie inférieure (20) présente sur sa surface de fond (27) une bague convexe au moins partiellement tournante (29).

8. Dispositif selon la revendication 1 ou 2, caractérisé en ce que la partie supérieure (30) présente un bouchon (41) vissé à un élément du couvercle de la partie supérieure (30) dont la surface frontale, qui pénètre dans le dispositif, forme la surface de fond de la partie supérieure et en ce que le diamètre du filetage du bouchon (41) est légèrement inférieur au diamètre intérieur de la chambre (40) formée partiellement par la partie inférieure (20).

9. Dispositif selon l'une des revendications précédentes 1 à 8, caractérisé en ce que le filetage reliant les parties supérieure et inférieure (20, 30) est conformé comme un filetage mobile, par exemple comme un filetage trapézoïdal, rond ou droit.

10. Dispositif selon la revendication 1 ou 2, caractérisé en ce que la partie supérieure ou inférieure présente des moyens de blocage réglables qui permettent de modifier l'écartement respectif des surfaces de fond pendant l'utilisation.

11. Dispositif selon la revendication 10, caractérisé en ce que les moyens de blocage correspondants sont prévus sur les faces opposées de la douille (123) et de la base (122).

12. Dispositif selon la revendication 10 ou 11, caractérisé en ce que les moyens de blocage se composent de plusieurs creux (124) disposés dans différents plans de section et, en principe, parallèles aux surfaces frontales (12) de la partie supérieure ou inférieure ainsi qu'au moins un tenon d'arrêt convexe (127) qui s'encliquotte partiellement dans un creux; à cet égard, les creux (124) sont reliés entre eux par des évidements (126) dont la largeur est légèrement supérieure au tenon d'arrêt (127) et inférieure à la longueur des creux (124).

**Claims**

1. Device for cracking or crushing nuts consisting of a receptacle with chamber capable of holding one or more nuts and characterised by the fact that the receptacle is in the form of a threaded cylindrical container made up of an upper and a lower piece (30, 20), each of these being constructed either as a single part or from a number of parts and capable of being screwed together, the inner base surfaces (32, 27) of the upper and lower pieces forming the two surfaces which exert the pressure on the nuts in order to crack them, and there being considerable axial play between the interlocking threads of the upper and lower pieces (30, 20) to the extent that this prevents the nuts from being squashed.

2. Device in accordance with Claim 1, characterised by the fact that there is considerable transverse play between the interlocking threads of the upper and lower pieces (30, 20).

3. Device in accordance with Claim 1 or 2, characterised by the fact that the lower piece (20) consists of a grip (21), a socket piece (22) connected to the grip (21), and a sleeve (23) which screws onto the socket piece (22) by means of an internal thread and which can be screwed together with the upper piece (30) by means of an outer thread, the external face of the socket piece (22) which faces away from the grip (21) forming the base surface of the lower piece (20), and the socket piece (22) being attached to the grip (21) in such a way that these two parts cannot turn relative to one another.

4. Device in accordance with Claim 3, characterised by the fact that the socket piece (22) is provided with a lip (28) around its outer facing edge, the diameter of the lip corresponding approximately to the internal clearance diameter of the sleeve (23) and being larger than the core diameter of its internal thread, the inner face of the sleeve (23) being threaded over a section of its length at the end closer to the grip (21) and the socket piece (22) being attached to the grip by means of a central screw (26).

5. Device in accordance with Claim 4, characterised by the fact that the thread on the socket piece and/or the corresponding thread on the sleeve (23) has at least one slot cut into it running perpendicular to the direction of rotation.

6. Device in accordance with Claim 3, characterised by the fact that the sleeve (23) has a raised projection on the edge facing the grip (21), for example in the shape of a tooth (14).

7. Device in accordance with Claim 1 or 2, characterised by the fact that the lower piece (20) has on its base surface (27) a raised ring (29) which may be complete or interrupted.

8. Device in accordance with Claim 1 or 2, characterised by the fact that the upper piece (30) has a central insert (41) which screws into a covering cup forming part of the upper piece (30) and whose front end projects into the inside of the device and forms the base surface of the upper piece, the diameter of the thread of the insert (41) being marginally smaller than the internal clearance diameter of the chamber (40) partially formed by the lower piece (20).

9. Device in accordance with any of the Claims 1 to 8, characterised by the fact that the thread by means of which the upper and lower pieces (20, 30) are joined together allows the transmission of movement, being, for example, an acme thread, knuckle thread or square thread.

10. Device in accordance with Claim 1 or 2, characterised by the fact that the upper and lower pieces are provided with an adjustable holding facility by means of which the distance between the two base surfaces when the device is in use can be altered.

11. Device in accordance with Claim 10, characterised by the fact that the surfaces of the sleeve (123) and the socket piece (122) which face each other are provided with the corresponding elements of the holding facility.

12. Device in accordance with Claim 10 or 11, characterised by the fact that the holding facility consists of a number of recesses (124) in various sectional planes running essentially parallel to the end faces (12) of the upper and lower pieces, as well as at least one raised locating lug (127) which slots into one of the recesses, the recesses (124) being joined to each other by slots (126) which are marginally wider than the locating lug (127) and shorter than the length of the recesses (124).

EP  0 217 190  B1

Fig. 1

Fig.2

1

Fig. 3

30

26

29

28

22

23

14

24

11

25

21

13

2

*Fig. 4*

23

22

11

13

12

25

21

*Fig. 5*

(22)

30

20

*Fig. 6*